# EUROPEAN PATENT APPLICATION

(11) **EP 1 624 690 A1**
(43) Date of publication of application: **08.02.2006**
(21) Application number: 04425621.2
(22) Date of filing: 06.08.2004
(51) Int. Cl.: H04N 7/173, H04N 7/167, H04L 9/32

(54) **Method for transmitting and receiving video signals**

(71) Applicant: Netsystem.com S.p.A., 20121 Milano (IT)
(72) Inventor: Frassa, Stefano, 10015 Ivrea, Torino (IT)
(74) Representative: Siniscalco, Fabio

(57) **Abstract**

Method for transmission/reception of signals using a user device (2) intended to receive a video signal (VS_{CR}) and a central management device (4), the method comprising the steps of:
a) transmission from the central device (4) to the user device (2) of an recognition word (PSW) in a first encoded form (PSW1);
b) retransmission from the central device to the user device of the recognition word received from the central device in a second encoded form (PSW2);
c) authentication by the central device of the user device on the basis of the recognition word (PSW2) in the second encoded form;
d) a step to enable the user device to display the video signal when the authentication step c) ends with the identification of said user device.

## Description

The present invention refers to the field of the transmission and reception of video signals. Particularly, but not limited to, the present invention refers to methods concerning a service for the distribution/broadcasting of television contents for users subscribing to said service.

For example, with reference to pay television, the most widespread technology today envisages broadcasting of the video signal in encoded form so that users who have not subscribed to the service cannot display the signal. Pay television users have an apparatus (commonly known as set-top-box) provided with a decoding module (also called scrambler) suitable to decode the television signal. The television signal is decoded by the scrambler on the basis of a decoding key stored in a local memory (for example, a smart-card) and associated to a particular user. Therefore, the user must be provided with both the scrambler and the smart-card which stores the decoding key.

The above-described technology has drawbacks and limitations connected both to unsatisfactory safety due to violations by users who are not regular subscribers to the television service and to the fact that use of the smart-card is strictly necessary, leading to logistic difficulties in its distribution.

Object of the present invention is to resolve some of the above-mentioned disadvantages of the known art.

Said object is reached by a signal transmission/reception method according to the attached claim 1. Preferred embodiments of the method according to the invention are defined in the dependent claims from 2 to 20. A device for signal reception and processing defined in claims 21 to 26 and a transmitting/reception system defined in claims 27 and 28 also form part of the present invention.

The features and advantages of the present invention will become more apparent from the following detailed description of an exemplary but non-limiting embodiment thereof, as illustrated in the accompanying drawings, in which:
- figure 1 is a schematic view of an embodiment of a video signal transmission/reception system, according to the invention;
- figures 2 and 3 show a flow diagram of some steps of an embodiment of a method to use said system according to the invention.

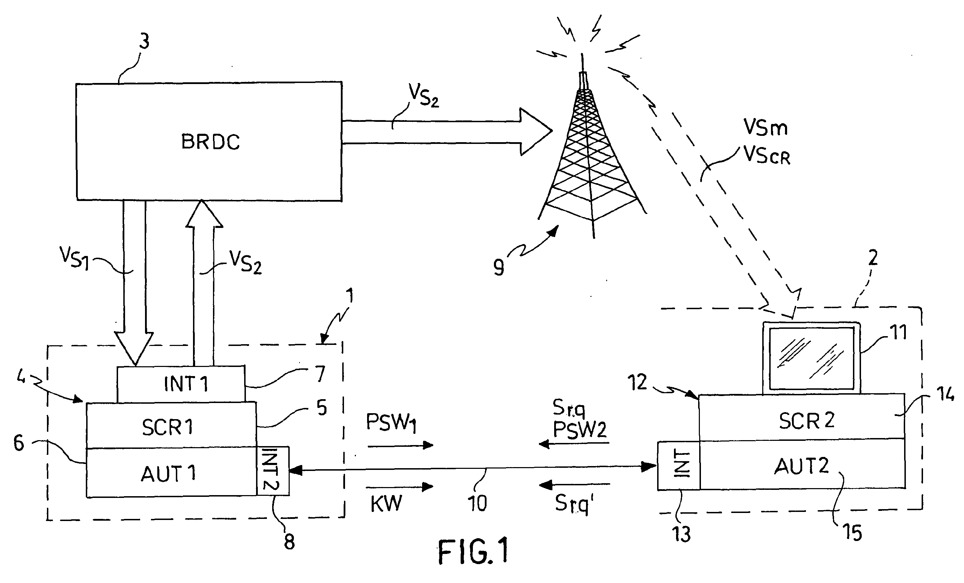

Figure 1 shows a system 100 for the transmission of video signals to a plurality of users. For example, the system 100 can be a system which operates in multicast mode or in broadcast mode. As is known to the skilled in the art, the multicast mode uses a point-to-multipoint data transmission where it is possible to define groups of receivers. In the broadcast mode, however, all points of the system network are considered receivers.

According to a first embodiment, the video signals are television signals (analogue or digital), to which corresponding audio signals are associated.

With reference to figure 1, the system 100 comprises a service center 1, at least one user device 2 and a broadcasting center 3 (BRDC).

The service center 1 comprises at least one central management device 4 including a first encoding/decoding module or first scrambler 5 (SCR1) connected electrically to a first processing module 6 (AUT1). The first scrambler 5 is a conventional type device capable of processing a video signal, for example, in the form of digital data stream applying to it an encryption algorithm. In particular, said encryption algorithm is based on a keyword (for example, known only to the service center) which is generated by the first scrambler 5.

The first processing module 6 is a conventional electronic processor with a memory and calculation capacity suitable for the service to be carried out. For example, the first processing module 6 is a processor or computer which comprises a conventional processing unit, mass and working memories and suitable interfaces for the operators and for external connection. This first processing unit 6 can carry out functions of control of the first scrambler 5 and management of communication with the user device 2 and with the broadcasting center 3. The central device 4 (in particular, the first scrambler 5) is provided with a first interface 7 (INT1) which enables connection to the broadcasting center 3 for video signal exchange (for example, in the form of a digital stream). Moreover, the central device 4 (in particular, the first processing module 6) is provided with a second interface 8 (INT2) which enables connection to the user device 2. According to a preferred embodiment, the second interface 8 includes conventional apparatus (for example, an analogue modem, an ISDN Integrated Service Digital Network modem or an ADSL Asymmetric Digital Subscriber Line modem) which make it possible to connect the central device 4 to the user device 2 by means of a telephone line 10.

The broadcasting center 3 comprises apparatus known to the skilled in the art (and which, therefore, do not require a detailed description) and is able to emit signals corresponding to the video stream and, for example, feed them to a transmission network intended to transport them and make them available to the user device 2. According to the schematic example in figure 1, the video stream is sent to an antenna station 9 which, after suitable treatment, broadcasts it.

For example, the broadcasting center 3 can transmit the signal by means of a satellite system, a terrestrial digital system or a system operating with cable transmission. Preferably, the broadcasting center 3 is able to transmit video signals in accordance with the DVB (Digital Video Broadcasting) standard.

According to the first embodiment considered, the user device 2 includes a television set 11, a control and decoder device 12 and an interface block 13 (INT) for communication with the service center 1 through the line 10. The television set 11 can be of the conventional type and, according to the embodiment in figure 1, is such as to receive and display decoded video signals emitted by the antenna station 9. The control and decoder apparatus 12 is connected to the television set 11 to exchange the video signal and is such as to perform control and decoding operations (i.e. decryption) of the communications with the service center 1.

For example, the control and decoder apparatus 12 is a conventional set-top-box for televisions including a second encoding/decoding module or second scrambler 14 and a second processing module 15 (AUT2) which controls the second scrambler 14 and communications with the service center 1. In this case, the second scrambler 14 and the second processing module 15 can comprise a respective electronic card provided with a processing unit and programmable and non-programmable memories such as, for example, a card integrated with a microcontroller. Advantageously, the second control and decoder apparatus 12 is a set-top-box of the MHP (Multimedia Home Platform) type available on the market. The control and decoder apparatus 12 can be connected to the television set 11 for the exchange of video signals and can also be connected directly to an antenna (not illustrated in the drawing) which receives the broadcasted video stream and makes it available to said apparatus 12 and to said television set 11.

The interface block 13 is, for example, similar to the second interface 8 of the central device 4 and includes a suitable modem for connection to the telephone line 10.

An example of how the transmission system 100 works will now be given, according to the invention. Reference will be made initially to the exchange of signals between the broadcasting center 3 and the service center 1 regarding encoding of the video signal. For the purposes of this description, the terms "encryption" and "encoding" are equivalent, and indicate processing of a signal, data or original information in order to prevent those who are unacquainted with the used processing method (encryption algorithm and/or encoding key) to obtain the original signal, data or information. The reverse operation which makes it possible to obtain the original signal, data or information will be indicated with the equivalent terms "decryption" or "decoding".

Consider a user who has a user device 2 and who intends to make use of the video signal broadcasting/distribution service regarding events of any nature whatsoever (for example, films, sporting events, cultural events, etc.) offered by the broadcasting center 3.

The broadcasting center 3 sends the first video stream VS₁ to the service center 1, which receives it through the first interface 7. It should be observed that the first video stream VS₁ is sent uncoded, i.e. it is not encoded and is sent only to the service center 1 (through a special connection) and not to the users. Said first video stream VS₁ is processed by the first scrambler 5 which applies an encryption algorithm such as, for example, the conventional Two-Fish algorithm according to a specific keyword KW.

The application of said encryption algorithm leads to the generation of a second video stream VS₂ (encrypted) which is sent, through the interface 7, to the broadcasting center 3 which, in its turn, can transmit it to the antenna station 9. The antenna station 9 processes it (for example modulating it and converting it into frequency) to make it suitable for radio transmission, generating a third encrypted video stream VS_{CR}.

The television set 11 of the user device 2 receives the third video stream VS_{CR} and, at an initial stage, is unable to decrypt it since it does not know the keyword KW used to encode it, i.e. said keyword KW is not stored in the second scrambler 14.

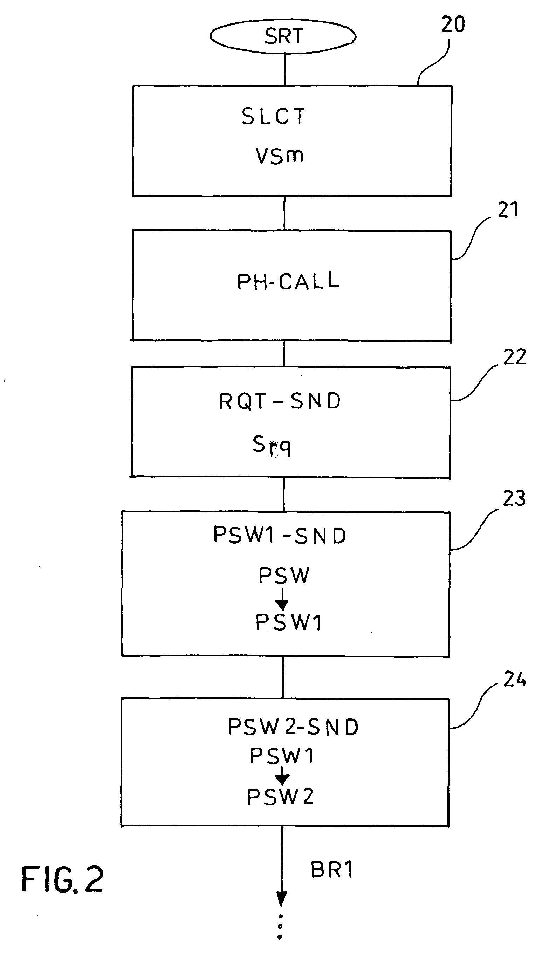

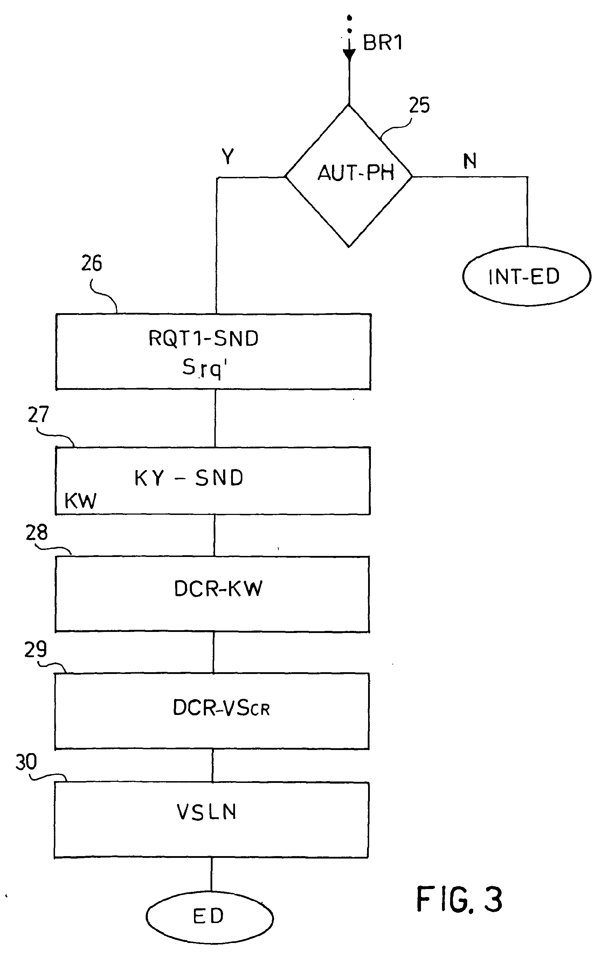

The other steps of the second method of the invention are described also referring to the flow diagram in figures 2 and 3, between symbolic starting SRT and end ED steps. The flow diagrams in figures 2 and 3 are connected by a branch BR1.
For example, together with the third encrypted video stream VS_{CR}, the television set 11 receives a further data stream VSₘ (uncoded) corresponding to images which provide information on the various contents offered by the service. In a conventional manner (typically, using a remote control and browsing interactive pages) the user selects an event which he wants to watch (SLCT step, 20) and sends a signal to the television set 11 to confirm his wish to see the event.

According to the embodiment of the invention described here, the user device 2, by means of the second processing module 15 and the interface block 13, makes a telephone call (step 21, PH-CALL) to a pre-established telephone number associated to the first processing module 6 (or, to the respective second interface 8). Following said telephone call (or when the central device 4 answers) a connection is established on the telephone line 10 between the user device 2 and the central device 4.

Advantageously, through the connection established on the telephone line 10, the second processing module 15 sends (step RQT-SND) a request signal Srq (for example, a digital signal) to the central device 4 asking the central device 4 to begin authentication procedures of the user associated to the device 2. For example, said request signal Srq includes univocal identification data regarding the user device 2.

In reply to this request signal Srq, the central device 4 transmits (step PSW1-SND, 23) an recognition word to the user device 2 in a first encoded form. More in particular, the first processing module 6 receives the request signal Srq and applies a first encoding criterion (such as, a specific encryption algorithm) to a recognition word or password PSW. Said password PSW is generated, for example randomly, by the first processing module 6 and can be a string of bits having varying lengths.

The first processing module 6 encodes the password PSW according to the specific encryption algorithm, generating a signal corresponding to the encoded password PSW1. The first processing module 6 and the second interface 7 send said encoded password PSW1 on the telephone line 10.

The user device 2 retransmits (step PSW2-SND) the same password PSW, encoded according to a second encoding criterion, to the central device 4. More in detail, the second processor 15 receives the signal bearing the encoded password PSW1 and, using a further algorithm, encodes the password PSW so obtaining a further encoded password PSW2, which it sends to the central device 4 by means of a respective signal on the connection line 10.

The central device 4 receives the signal bearing the further encoded password PSW2 and, on this basis, carries out authentication (step AUT-PH, 25) of the user associated to the device 2. For example, the central device 4 is able to decode the further password PSW2 (according to said further algorithm) in order to verify if it provides as result the password PSW. Alternatively, the central device 4, where the password PSW is stored, applies the above-mentioned further algorithm to said password PSW so as to obtain the further encoded password PSW2 and compare it to the one sent by the user device 2, in order to verify that it matches.

In the case this authentication procedure is successful (branch Y of figure 3) and the user is recognized as having the right to use the service offered, the method continues with procedures which make it possible for the user device 2 to display the received encrypted video signal VS_{CR}. Should the contrary occur (branch N), i.e. when the above-described authentication procedure does not lead to recognition of the user, the procedure is interrupted (step INT-ED) and the encrypted video stream VS_{CR} cannot be displayed. For example, in the case of failed recognition, the first processing module 6 of the central device 4 sends a signal representing failed recognition to the second processing module 15 which reacts by de-activating the telephone connection.

Traveling along the branch Y, a step is preferably provided for wherein the user device 2 sends a further request signal Srq' to the central device 4 (step RQT1-SND, 26) asking to receive the keyword KW used to encrypt the video stream VS_{CR} corresponding to the selected event.

The first processing module 6 of the central device 4, following the request signal Srq', sends (step KW-SND, 27) a signal bearing the keyword KW to the user device 2. Advantageously, the keyword KW is sent to the user device 2 in encrypted form and said encrypting procedure is, for example, carried out by the first processing module 6.

The second processing module 15 receives the encrypted keyword KW through the interface block 13 and performs decryption procedures (step DECR-KW, 28) on the basis of a suitable algorithm with which it is provided. Subsequently, the second scrambler 14 uses the keyword KW to decode (step DCR-VS_{CR}, 29) the video stream VS_{CR} and it sends it to the television set 11 which enables its visualization (step VSLN, 30).

It should be noted that numerous variations of the system and method according to the invention are provided for compared to the above-described embodiments.

For example, it can be established that the authentication procedure (i.e. steps 22, 23, 24, 25) and/or the enabling procedure (i.e. steps 26, 27, 28, 29) are repeated continuously during the entire event visualization period. In particular, the central device 4 can change the password PSW and/or the keyword KW at pre-established or random intervals repeating the password PSW and/or keyword KW encoding and transmission steps. This method is particularly advantageous since it is very effective in the case of violation attempts by non-authorized users. Nonetheless, the password PSW and/or the keyword KW can only be changed once and, typically, at each request to display an event, offering in any case a considerably high safety level.

It should be noted that the fact that the keyword KW necessary to decode the video stream VS_{CR} has to be sent to the central device 4 makes it possible to avoid the use of a specific local memory component (such as a memory card, "smart-card") intended to store said keyword to be associated to each user device 2 (set-top-box) possessed by all subscribers. Not having to use a smart-card makes user subscribing procedures much easier and prevents cloning possibilities.

However, it is also possible to apply the teachings of this invention in the event use of a local memory component is desired. In this case, the authentication procedure described with reference to steps 22, 23, 24, 25 remains unchanged, while the keyword KW is sent to the second scrambler 14 by said local memory component (associated to the user device 2) only when the last authentication step 25 gives a positive outcome.

Furthermore, it should be observed that for the exchange of the keyword between the user device 2 and the central device 4, it is also possible not to use the telephone line but rather another connection channel. For example, the keyword KW can be exchanged using the same method with which the transmission/reception of the video stream takes place.

As regards the possibility of charging the user for the service, if the telephone line is used the telephone bill of the user possessing the user device 2 can be debited. In particular two different charging methods can be used. In the first case, charging can be by "call", whereby the user's number is debited after the central device 4 answers the call made by the user device 2 during the above-described step 21 (PH-CALL). This method is independent from the fact the telephone connection between the user device 2 and the central device 4 is active or not while the service is being used (displaying the event).

According to the second case, the telephone line following the call in step 21 (PH-CALL) remains active during the entire visualization period and the charging is based on the time duration of the telephone connection.

Advantageously, according to the second method of charging, in the case the telephone connection on the line 10 is interrupted, the second processing module 15 and the second scrambler (if foreseen) interrupt visualization of the video stream, for example, by interrupting the decoding procedure. This makes it possible, after the authentication step 25 (AUT-PH) or (if foreseen) after the keyword KW exchange step, to prevent the user from interrupting the telephone connection on the line 10 in order to disable charging on the basis of the connection time.

It should be noted that the charging methods described above both have the advantage of permitting micro-payments, i.e. the amount debited corresponds directly to the effective use made of the service. Furthermore, debiting the cost to the telephone bill reduces the possibility of users falling in arrears with the payment.

Other embodiments alternative to the one described with reference to figure 1 refer to the type of user device used. In alternative to the use of a television set 11, an electronic processor such as a personal computer can be used which may comprise a display monitor, the modem functions included in the interface block 13 and the second processing module 15. Said personal computer can easily be associated to an electronic card which includes all the software modules necessary for running the service and for the operations to be performed by the second scrambler 14. In this case, the user's personal computer acts a client computer and the first processing module 6 associated to the service center 1 acts a server for the exchange of the passwords PSW (PSW1 and PSW2) and the keywords KW. Said exchange of passwords and keywords and video stream can take place with a network architecture of the type TCP/IP (Transmission Control Protocol/Internet Protocol).

Furthermore, in the case the user device 2 is of the personal computer type, said personal computer will also receive a data stream relative to additional information necessary to define how the video stream is displayed. Advantageously, this additional information can be sent from the central device 4 to the user's personal computer in encoded form and the personal computer of the user device 2 will decode it.

With reference to an example referring to the Microsoft-Windows standard, said additional information is sent (for example on the connection line 10) in the form of a NSC file (Multicast Information file). Advantageously, the NSC file stored on the user's personal computer (for example, in a volatile memory) immediately after being decoded and read (for example, a few milliseconds) can be cancelled so that it cannot be used by non-authorized users who illegally connect to the user's personal computer.

Furthermore, the present invention is also applicable in the case the user device is a mobile cellular phone or a PDA (Personal Digital Assistant) of the third generation which supports visualization of video signals. As is evident to the skilled in the art, the mobile phone or PDA will be provided with special electronic cards/software which substantially perform the functions of the second processing module 15 and the second scrambler 14.

In addition to the above-described advantages, the teachings of the present invention are economically convenient since they can be put into effect without specific hardware and using equipment existing on the market.

## Claims

1. Method for transmission/reception of signals using a user device (2) intended to receive a video signal (VS_{CR}) and a central management device (4), the method comprising the steps of:
a) transmitting (23) from the central device (4) to the user device (2) a recognition word (PSW) in a first encoded form (PSW1);
b) retransmitting (24) from the central device (4) to the user device (2) the recognition word received from the central device in a second encoded form (PSW2);
c) authenticating (25), by the central device, the user device on the basis of the recognition word (PSW2) in the second encoded form;
d) a step (26-28) to enable the user device to display the video signal when the authentication step c) ends with the recognition of said user device.

2. Method according to claim 1 wherein, previous to step a), the method comprises a transmission step (22) from the user device to the central device of a first authentication request signal (Srq) including an univocal identification data of the user device.

3. Method according to claim 2, wherein said step a) includes the step in which the central device (4) receives the first signal (Srq) and sends, to the user device (2), a second signal bearing the encoded recognition word (PSW1) according to a first encoding criterion, the recognition word being associated to said user device identification data.

4. Method according to claim 3, wherein step b) comprises the steps of:
- receiving the second signal by the user device;
- encoding, on the basis of a second criterion, the recognition word received in order to convert it into said second encoded form (PSW2), and
- transmitting to the central device a third signal bearing said recognition word in the second encoded form.

5. Method according to claim 4, wherein said step c) includes the step in which the central device (4) receives the third signal and identifies the user device on the basis of the recognition word in the second encoded form (PSW2) by means of the second criterion, said second criterion being made available to the central device.

6. Method according to claim 1, further comprising a step in which the video signal is sent to the user device in encrypted form (VS_{CR}) so as to prevent visualization by the user device.

7. Method according to claim 6, wherein said step d) further comprises the steps of:
e) transmitting (27) from the central device to the user device a decryption key (KW) of the video signal, said decryption key being sent after the recognition of the user device;
f) processing (29) the received video signal on the basis of said decryption key so that it can be displayed by the user device.

8. Method according to claim 7, wherein said step e) is preceded by a transmission step (26) of a third request signal (Srq') of said decryption key from the user device to the central device.

9. Method according to claim 7, wherein said step e) includes transmission from the central device to the user device of a fourth signal bearing said encoded encryption key according to a respective encoding criterion.

10. Method according to claim 9 wherein said step f) further comprises the steps of:
- receiving at the user device said fourth signal;
- decoding (28) the decryption key on the basis of said respective decoding criterion in order to obtain the decryption key (KW) to be used for said processing (29) of the video signal.

11. Method according to claim 1, wherein the steps a) and b) are performed by sending the recognition word through a telephone line (10).

12. Method according to claim 1, further comprising a step of establishing (21) a telephone connection between the user device (2) and the central device (4) following a telephone call made by the user device to a telephone number associated to the central device.

13. Method according to at least one of the preceding claims, wherein the first and the second signals relative to the recognition word (PSW) are sent through the established telephone connection.

14. Method according to at least one of the preceding claims, wherein the third and the fourth signals relative to the encryption key (KW) are sent through the established telephone connection.

15. Method according to claim 1, comprising the steps of:
- replacing the recognition word with a further recognition word at least once and by said central device;
- repetition of said steps a), b), c) and d) for each further recognition word.

16. Method according to claim 15, wherein the recognition word is replaced at pre-established intervals.

17. Method according to at least one of the preceding claims, wherein said telephone connection is kept open substantially for the entire visualization period of the video signal by said user device.

18. Method according to claim 1, such that if the user device is not recognized by the central device, the user device is not enabled to display the video signal.

19. Method according to at least one of the preceding claims, wherein the transmission/reception of the video signal is carried out by a broadcast or multicast service.

20. Method according to at least one of the preceding claims, wherein the transmission/reception of the video signal is carried out by means of at least one of the following systems: satellite system, digital terrestrial system, cable system.

21. Video signal reception and processing device produced in such a way as to operate as the user device of the transmission/reception method of at least one of the preceding claims.

22. Device according to claim 21, comprising a television set (11) to display said video signal and a decoding apparatus (14) to decrypt the video signal.

23. Device according to claim 21, further comprising a modem device (13) to make said telephone call to the central device.

24. Device according to claim 21, comprising an electronic processor, preferably of the personal type, such as to receive the video signal in digital form.

25. Device according to claim 24, wherein the electronic processor is such as to receive a digital signal from the central device through said telephone connection containing additional information concerning the video signal to be displayed.

26. Device according to claim 25, wherein said additional information is sent from the central device to the user device in encrypted form, said electronic processor being such as to decrypt the additional information and use it to display the video signal.

27. System (100) for transmission/reception of video signals, comprising a user device (2) connected to a central device (4), **characterized in that** the user device (2) and the central device (4) are produced in such a way as to make use of the method of transmission/reception as defined in at least one of claims from 1 to 20.

28. System according to claim 27, further comprising a broadcasting center to supply the video signal in uncoded form (VS₁) to the central device and to receive said video signal in encoded form (VS₂) from the central device, the central device being provided with an encoding/decoding module (5) to supply said video signal in encrypted form.
